# EUROPEAN PATENT APPLICATION

(11) **EP 2 924 316 A1**
(43) Date of publication of application: **30.09.2015**
(21) Application number: 12888705.6
(22) Date of filing: 26.11.2012
(51) Int. Cl.: F16G 5/16

(54) **CONTINUOUSLY VARIABLE TRANSMISSION BELT AND MANUFACTURING METHOD THEREFOR**

(71) Applicant: TOYOTA JIDOSHA KABUSHIKI KAISHA, Toyota-shi, Aichi-ken, 471-8571 (JP)
(72) Inventor: ANDO Satoru, Toyota-shi Aichi 471-8571 (JP); ADOMI Ryo, Toyota-shi Aichi 471-8571 (JP)
(74) Representative: D Young & Co LLP
(86) International application number: PCT/JP2012/080466
(87) International publication number: WO 2014/080517

(57) **Abstract**

Provided is a continuously variable transmission belt that has a stacked ring body supporting in an annual manner a plurality of metal elements arranged in the front and the rear, that is wound around a drive sheave and a driven sheave, and that transmits drive force between the two sheaves. The front ends and the rear ends of the metal elements are formed in a single curved shape that protrudes smoothly in either the forward or the backward direction of the advancing direction.

## Description

### TECHNICAL FIELD

The present invention relates to a continuously variable transmission (CVT) belt configured with a plurality of metal elements arranged one behind another and annularly supported by a stacked or laminated ring body, the CVT belt being wound around a drive sheave and a driven sheave to transmit driving force between the both sheaves and relates to a manufacturing method for the CVT belt.

### BACKGROUND ART

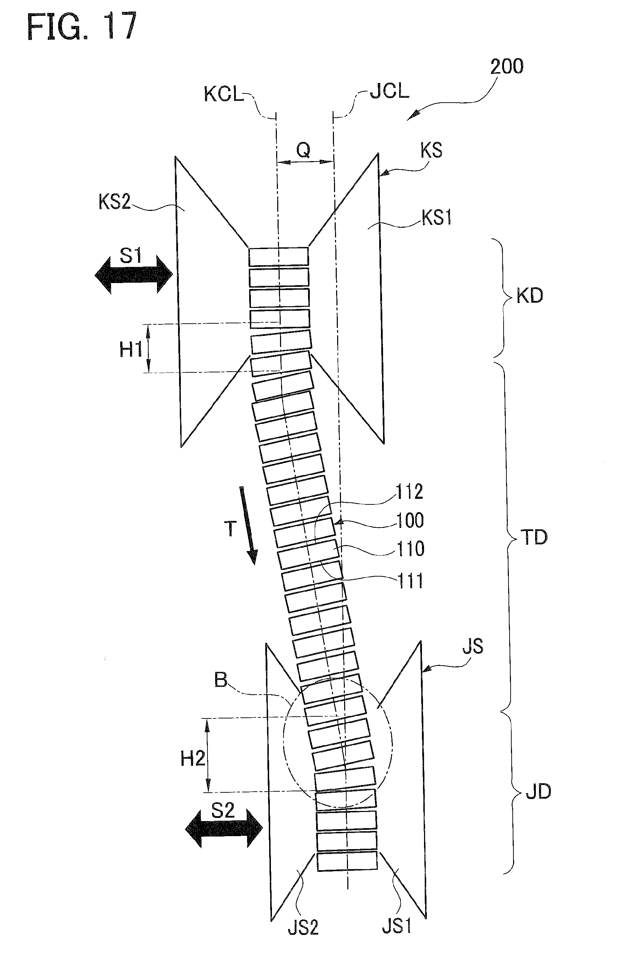

As shown in FIG. 17, for example, in a continuously variable transmission (CVT) 200, a continuously variable transmission belt 100 is wound around a drive sheave KS and a driven sheave JS. The drive sheave KS and the driven sheave JS are respectively configured to form V-shaped grooves between a fixed sheave KS1 and a movable sheave KS2 and between a fixed sheave JS1 and a movable sheave JS2, each of the sheaves is of conical plate-like shape. The CVT 200 changes speeds in a way that the movable sheaves KS2 and JS2 slide in axial directions S1 and S2 to adjust a radius of gyration of the wound CVT belt 100. As a result, a belt center line KCL of the belt wound on a wound section KD around the drive sheave KS could cause a positional displacement Q in an axial direction with respect to a belt center line JCL of the belt wound on a wound section JD around the driven sheave JS (this displacement of the belt center lines is also called as "misalignment"). In a case that the CVT belt 100 has this misalignment, a traveling direction T of the CVT belt 100 on a straight section TD between the drive sheave KS and the driven sheave JS is to be inclined relatively to a traveling direction on the wound section JD.

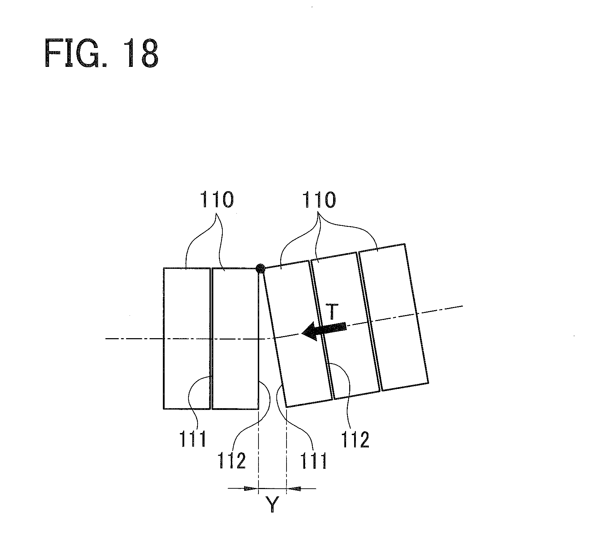

Further, as shown in FIGs. 17 and 18, front ends 111 and rear ends 112 where adjacent metal elements 110 come to contact with each other are usually formed as flat surfaces. When the metal elements 110 are brought into contact with the drive sheave KS and the driven sheave JS, the adjacent metal elements 110 are to make partial contact (one-side contact), causing generation of a gap Y which is inclined to the traveling direction (this inclination of the metal element relative to the traveling direction is called "yawing"). In an effort to fill this inclined gap Y, the metal elements 110 make a slip in sections where the metal elements 110 come to or out of contact with the drive sheave KS or the driven sheave JS (regions indicated with H1 and H2 in FIG. 17). When the metal elements 110 and the drive sheave KS or the driven sheave JS slip to each other, efficiency in transmitting driving force and torque capacity of the CVT 200 are lowered. Further, the adjacent metal elements 110 having the inclined gap Y are partially contacted (one-side contact), and thereby bending moment is increased and the metal elements 110 might have a possibility of deformation and others when a high load is applied to the metal elements 110.

To address the above problem, there has been disclosed an invention arranged to make the metal elements a side-slip during traveling between the both sheaves to absorb the misalignment and reduce yawing of the metal elements when the metal elements are brought into contact with the both sheaves (see Patent Document 1, for example). This Patent Document 1 provides the following technical features. Each of metal elements is formed with protruding portions protruding from both left and right ends in a locking edge region on one primary surface among either one of a front surface (front end) at a front side and a rear surface (rear end) at a rear side in the traveling direction, and further formed on the other primary surface with a flat surface being in contact with the protruding portions of the adjacent metal element, the flat surface being formed at least on left and right ends in a locking edge region and extending in a direction orthogonal to the traveling direction.

### RELATED ART DOCUMENTS

### PATENT DOCUMENTS

Patent Document 1: JP-A-2001-27288

### SUMMARY OF INVENTION

### PROBLEMS TO BE SOLVED BY THE INVENTION

In the invention of Patent Document 1, however, the protruding portions protruding in the traveling direction are formed on left and right ends of one primary surface of each metal element, and the flat surface being in contact with the protruding portions of the adjacent metal element is formed on the other primary surface in a direction orthogonal to the traveling direction. According to this technique, when pressing force with low torque lower than a predetermined value acts between the adjacent metal elements, a clearance is created between the adjacent metal elements without the protruding portions being flattened, thus allowing side-slip of the metal elements. However, when the pressing force with large torque larger than the predetermined value acts, the protruding portions are flattened, making the metal elements closely contact each other, resulting in a difficulty in side-slip of the metal elements. Accordingly, when the pressing force with large torque larger than the predetermined value is repeatedly applied to the metal elements, the protruding portions are plastically deformed and completely flattened, that might cause difficulty in side-slip of the metal elements even when the pressing force with low torque lower than the predetermined value is applied thereafter. When the metal element is hard to laterally slip, yawing of the metal elements cannot be lowered while the metal element comes to contact with the drive sheave and the driven sheave, so that efficiency in transmitting the driving force and torque capacity of the CVT could be lowered. Further, a contact state of the metal elements is partial contact (one-side contact), and thereby the bending moment is increased and there is a possibility of deformation and others of the metal elements when the high load is applied to the metal element. Namely, the invention of Patent Document 1 has a problem that durability of the metal elements against high-load torque is not sufficient.

The present invention has been made to solve the above problems and has a purpose to provide a continuously variable transmission belt that is capable of maintaining a predetermined efficiency in transmitting the driving force and a predetermined amount of torque capacity of a continuously variable transmission, and further capable of improving durability of metal elements without applying excessive load to the metal elements against high-load torque and to provide a manufacturing method for the continuously variable transmission belt.

### MEANS OF SOLVING THE PROBLEMS

(1) To achieve the above purpose, one aspect of the invention provides a continuously variable transmission belt including: a plurality of metal elements arranged one behind another; and a stacked ring body annularly supporting the metal elements, the continuously variable transmission belt being wound around a drive sheave and a driven sheave to transmit a driving force between the drive sheave and the driven sheave, wherein a front end and a rear end of each of the metal elements are formed in a single curved shape smoothly protruding forward or rearward in a traveling direction. Herein, "a single curved shape" means that the metal element has a single upward projecting curve and that a curved shape of the front end and a curved shape of the rear end are made identical (the same shall apply hereinafter).

According to the above aspect, the front and rear ends of the metal element are configured to smoothly protrude in a single curved shape in either one of forward and rearward traveling directions, and therefore the metal element is allowed to gradually slide along the curved shape and to be successively inclined in sections where the metal element comes to contact with the drive sheave or the driven sheave. Thereby, the adjacent metal elements can sustain the state that the entire curved shape as a contact surface is subjected to the pressing force. As a result, generation of a gap inclined relative to the traveling direction can be reduced between the adjacent metal elements. Accordingly, it becomes possible to reduce slips on sections where the metal elements and the drive sheave or the driven sheave contact each other, so that even when gear ratio of the continuously variable transmission is adjusted, efficiency in transmitting the driving force and torque capacity can be maintained at predetermined values. Further, since the adjacent metal elements can be reduced with partial contact, the metal elements are not applied with an excessive load against the high-load torque, thus enhancing durability of the metal elements.

(2) In the continuously variable transmission belt set forth in (1), preferably, the curved shape is symmetrical in a left and right direction with respect to a belt center line.

According to the above aspect, the curved shape is symmetrical in a left and right direction with respect to the belt center line, and the metal element is therefore subjected to equal pressing force from the adjacent metal elements in the left and right direction with respect to the belt center line. Therefore, the metal elements slide along the curved shape in a direction that the belt center lines correspond to each other. Accordingly, each of the adjacent metal elements can further easily maintain the state that the entire curved shape is subjected to the pressing force. As a result, it becomes possible to further reduce slips on the sections where the metal elements and the drive sheave or the driven sheave contact each other, further facilitating maintenance of efficiency in transmitting the driving force and torque capacity of the continuously variable transmission. Moreover, partial contact of the adjacent metal elements can be further reduced, so that the metal elements are prevented from being subjected to excessive load against the high-load torque, thus enhancing durability of the metal elements.

(3) According to the continuously variable transmission belt set forth in (1) or (2), preferably, either one of front and rear ends of a head part of each of the metal elements is formed with a protrusion and the other end is formed with a recess, the recess being a long slot extending in a left and right direction. Herein, the long slot includes an oblong hole and an oval hole. The same shall apply hereinafter unless otherwise noted.

In the above aspect, either one of front and rear ends of the head part of the metal element is formed with the protrusion, and the other end is formed with the recess being the long slot extending in the left and right direction. Owing to this configuration, the adjacent metal elements are allowed to move in the left and right direction while the protrusion of each metal element is engaged with the long slot of the recess of the adjacent metal element. Accordingly, the adjacent metal elements can further easily sustain the contact state in which the metal elements are in contact on the entire curved shape.

(4) The continuously variable transmission belt set forth in (1) or (2) includes: first elements each of which is formed with a first through hole penetrating through front and rear ends of a head part of the first element and a shaft press-fitted in the first through hole to protrude by a predetermined length from the front end and the rear end of the head part; and second elements each of which is formed with a second through hole penetrating through front and rear ends of a head part of the second element, the second through hole being engaged with the shaft and being an elongated hole extending in a left and right direction, wherein the first elements and the second elements are alternately arranged.

According to the above aspect, each of the first elements is formed with the first through hole penetrating through the front and rear ends of the head part of the first element and the shaft press-fitted in the first through hole to protrude by the predetermined length from the front and rear ends of the head part. Each of the second elements is formed with the second through hole penetrating through the front and rear ends of the head part of the second element, the second through hole being engaged with the shaft and being the elongated hole extending in the left and right direction. The first elements and the second elements are alternately arranged. According to this configuration, after the first and second elements are shaped to be curved, the shaft is press-fitted into the first element, and then the shaft of the first element and the second through hole of the second element are engaged so that the first and second elements are arranged one behind another. Thereby, the curved shape of the first and second elements can be formed with no protrusions such as a shaft, thus enhancing processing precision of the curved shape. As a result, the adjacent metal elements can equally contact each other on the curved shape. The metal element is thus able to equally dissipate the load against the high-load torque, preventing local excessive load. Consequently, the metal element can enhance its durability without deformation or others even against the high-load torque. Further, the configuration of press-fitting the shaft into the first through hole can achieve reinforcement of the metal element compared to a metal element formed with a thin connection part of a protrusion and a recess by extrusion molding.

(5) In the continuously variable transmission belt set forth in any one of (1) to (4), the curved shape is a single arcuate shape.

According to the above aspect, since the curved shape is the single arcuate shape, a contact surface of the metal elements as a single entire arcuate shape enables to equally dissipate the pressing force against the high-load torque. Accordingly, the metal element can be prevented from being subjected to excessive load against the high-load torque, thus further enhancing durability of the metal element.

(6) Another aspect of the invention provides a method for manufacturing the continuously variable transmission belt according to any one of (1) to (5), wherein the method includes a heat processing step of: providing a correction tool including: a pair of receiving portions configured to support either one of the front end and the rear end of the metal element in positions separated from each other by a predetermined distance in a left and right direction with respect to a belt center line; and a pressing portion configured to press the other end on the belt center line, and heat-processing each of the metal elements while the metal element is clamped and pressed by the correction tool.

According to the above method, the correction tool includes: the pair of receiving portions configured to support either one of the front and rear ends of the metal element in positions separated from each other by a predetermined distance in a left and right direction with respect to the belt center line; and the pressing portion configured to press the other end on the belt center line, and the method further includes the heat-processing step of heat processing the metal element while the metal element is clamped and pressed by the correction tool. The metal element can be softened and corrected by the heat in this heat processing step. As a consequence, the curved shape can be formed in an aimed direction with less spring back after formation of the curved shape. The curved shape of the metal element can be therefore formed with high precision. Further, since the heat processing and the formation of the curved shape are concurrently performed, productivity of the metal element can be enhanced.

The metal element may be heat-processed in a state that a plurality of the metal elements are stacked and clamped by the correction tool. In this case, the stacked metal elements are subjected to a compression load from left and right sides of the metal elements so that the curved shape is further effectively formed. Further, the compression load is applied to a sheave contact surface (power transmission part) of each of the metal elements in a perpendicular direction, so that the power transmission part of each of the metal elements is arranged in parallel with the traveling direction and the efficiency in transmitting the driving force of the continuously variable transmission is enhanced.

(7) Another aspect of the invention provides a method for manufacturing the continuously variable transmission belt according to any one of (1) to (5), wherein the method includes a curve processing step of: providing an upper roll having a columnar outer circumferential surface and a lower roll having a columnar outer circumferential surface formed with a recessed groove configured to form the curved shape; and inserting each of the metal elements into the recessed groove and pressing the metal element by the upper and lower rolls to form the curved shape.

According to the above aspect, the method includes the step of providing the upper roll having the columnar outer circumferential surface and the lower roll having the columnar outer circumferential surface formed with the recessed groove configured to form the curved shape. The method includes the step of forming the curved shape by inserting the metal element into the recessed groove and pressing the metal element by the upper and lower rolls. Thereby, the metal element can be easily inserted in the recessed groove of the lower roll and the curved shape of the metal element can be formed in short time. Further, since the curved shape is formed by roll press by use of the upper and lower rolls to clamp and press the metal element, the process requires less formation load compared to stamping (pressing). Furthermore, this less formation load can lead to stability in a clearance between the upper and lower rolls and high precision in forming the curved shape of the metal element.

### EFFECTS OF THE INVENTION

According to the present invention, as well as enhancing efficiency in transmitting driving force and torque capacity of a continuously variable transmission, it is achieved to provide a continuously variable transmission belt capable of improving durability of a metal element without applying excessive load to the metal element against high-load torque, and to provide a manufacturing method for the CVT belt.

### BRIEF DESCRIPTION OF THE DRAWINGS

FIG. 1 is a partial perspective view of a continuously variable transmission (CVT) belt in a present embodiment;
FIG. 2 is a schematic vertical sectional view showing a state that the CVT belt in FIG. 1 is wound around a drive sheave and a driven sheave;
FIG. 3 is a top view of a metal element of the CVT belt in a first example according to the present embodiment;
FIG. 4 is a front view of the metal element of the CVT belt in the first example according to the present embodiment;
FIG. 5 is a rear view of the metal element of the CVT belt in the first example according to the present embodiment;
FIG. 6 is a front view of a first metal element of the CVT belt in a second example according to the present embodiment;
FIG. 7 is a side view of a first metal element of the CVT belt in the second example according to the present embodiment;
FIG. 8 is a front view of a second metal element of the CVT belt in the second example according to the present embodiment;
FIG. 9 is a side view showing a state that the first metal element and the second metal element of the CVT belt are connected in the second example according to the present embodiment;
FIG. 10 is a schematic top view showing a state that the CVT belt shown in FIG. 1 is wound around the drive sheave and the driven sheave;
FIG. 11 is a detailed view of a part A2 of the CVT belt shown in FIG. 10;
FIG. 12 is a schematic view showing a method for correcting a metal element of a CVT belt in a second embodiment;
FIG. 13 is a schematic view showing a method for correcting the metal element of the CVT belt by heat-processing (heat treatment) in the second embodiment;
FIG. 14 is a schematic view showing a method for correcting the metal element of the CVT belt in a stacked state by heat-processing in the second embodiment;
FIG. 15 is a schematic view showing a method for forming a curved shape of the metal element of the CVT belt by roll-press forming in the second embodiment;
FIG. 16 is a top view of a metal element in a modified example of the CVT belt in the embodiment, showing a top view of a stacked ring body shown in FIG. 9;
FIG. 17 is a schematic vertical sectional view showing a state that a conventional CVT belt is wound around a drive sheave and a driven sheave; and
FIG. 18 is a detailed view of a part B of the CVT belt shown in FIG. 17.

### MODE FOR CARRYING OUT THE INVENTION

A detailed description of preferred embodiments of a continuously variable transmission belt and a method therefor according to the present invention will now be given referring to the accompanying drawings.

### <Configuration of Continuously variable transmission belt>

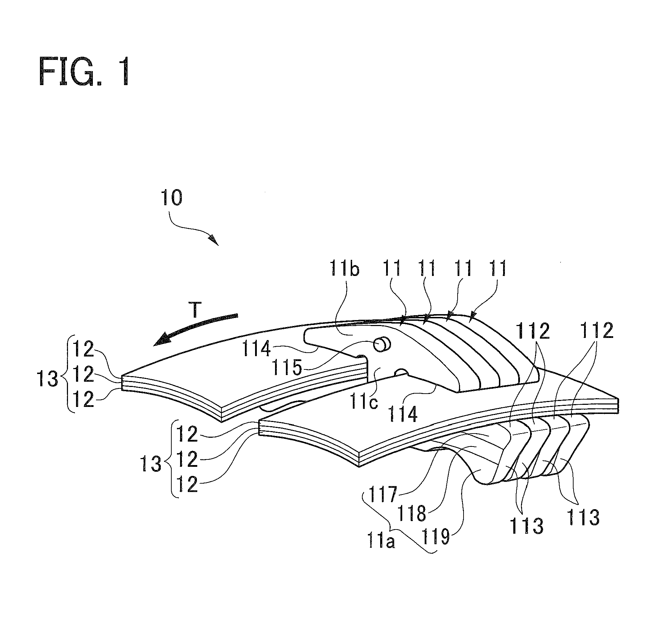

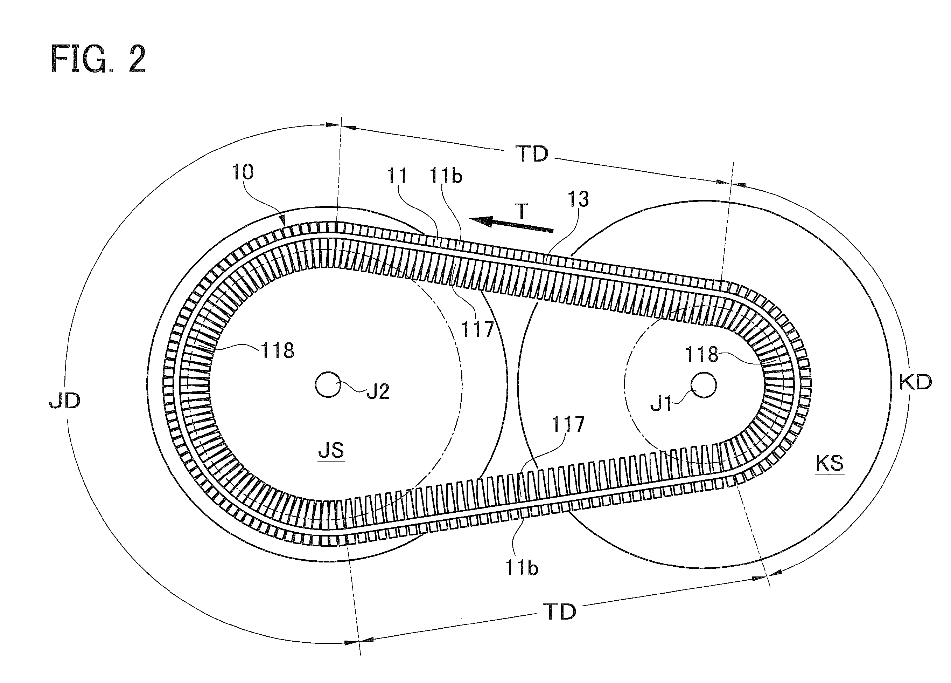

Firstly, a configuration of a continuously variable transmission belt according to the present embodiment is explained. FIG. 1 is a partial perspective view of a continuously variable transmission belt according to the present embodiment. FIG. 2 is a schematic vertical sectional view showing a state that the continuously variable transmission belt shown in FIG. 1 is wound around a drive sheave and a driven sheave.

As shown in FIG. 1, a continuously variable transmission (CVT) belt 10 includes two stacked or laminated ring bodies 13, each of which is configured in a manner that a plurality of endless metal rings 12 each having different circumferential length are stacked or laminated in close contact to each other. The CVT belt 10 further includes a plurality of plate-like metal elements 11 annularly supported in a circumferential direction by the both stacked ring bodies 13. FIG. 1 shows the stacked ring body 13 configured with three stacked endless metal rings 12 for simple explanation, but the number of endless metal rings 12 to be stacked is not limited to this and nine or twelve endless metal rings 12 may be stacked, for example. As material for the endless metal rings 12, steel material excellent in tensile strength and abrasion resistance, for example, maraging steel may be used. A thickness of the endless metal ring 12 is about 150 to 200 µm.

Each of the metal elements 11 has a plate-like shape including an almost rectangular body part 11a, an almost triangular head part 11b, and an almost rectangular neck part 11c connecting the body part 11a and the head part 11b. The body part 11a is formed with a thick portion 117 having a thick thickness, a tapered portion 118 being located beneath the thick portion 117 and having a thickness decreasing downward, and a thin portion 119 being located beneath the tapered portion 118 and having a thin thickness. At both ends of the body part 11a, slanted surfaces slanted inwardly and downwardly are formed. The slanted surfaces are drive transmission parts 113 to be in frictional contact with conical wall surfaces of a drive sheave KS and a driven sheave JS shown in FIG. 2 for transmitting the driving force.

The neck part 11c is formed on left and right sides with belt holding grooves 114 to which the stacked ring bodies 13 are inserted. At a lower end of each of the belt holding grooves 114, a saddle part 112 is formed to be in contact with an inner circumferential surface of the stacked ring body 13. The saddle part 12 is formed in parallel with each of the left and right shoulders (upper ends) of the body part 11a.

The head part 11b is formed on a center of its front end with a protrusion 115 and on a center of its rear end with a recess 116 (not shown). In the adjacent metal elements 11, the protrusion 115 and the recess 116 are engaged to prevent displacement in an upper and lower direction and in a left and right direction. As material for the metal elements 11, steel material allowed to be heat-processed and excellent in abrasion resistance, for example, carbon tool steel (SK material) may be used. A thickness of each metal element 11 is about 1 to 2 mm.

As shown in FIG. 2, in the metal elements 11 arranged adjacent and one behind another in a traveling direction T, when the metal elements 11 travel along straight sections TD between the drive sheave KS and the driven sheave JS, mainly the head parts 11b and the thick portions 117 of the adjacent metal elements contact with each other. When the above metal elements 11 travel along wound sections KD and JD wound around the drive sheave KS and the driven sheave JS, mainly the tapered portions 118 and the thin portions 119 of the adjacent metal elements contact with each other. Each of the metal elements 11 is configured to transmit the driving force in a manner that the metal element 11 preceding in the traveling direction is pressed by each contact surface of the following metal element 11 while the metal elements 11 travel along the straight sections TD and the wound sections KD and JD. The driving force is input from an input shaft J1 of the drive sheave KS and output from an output shaft J2 of the driven sheave JS.

### (Metal element in First example)

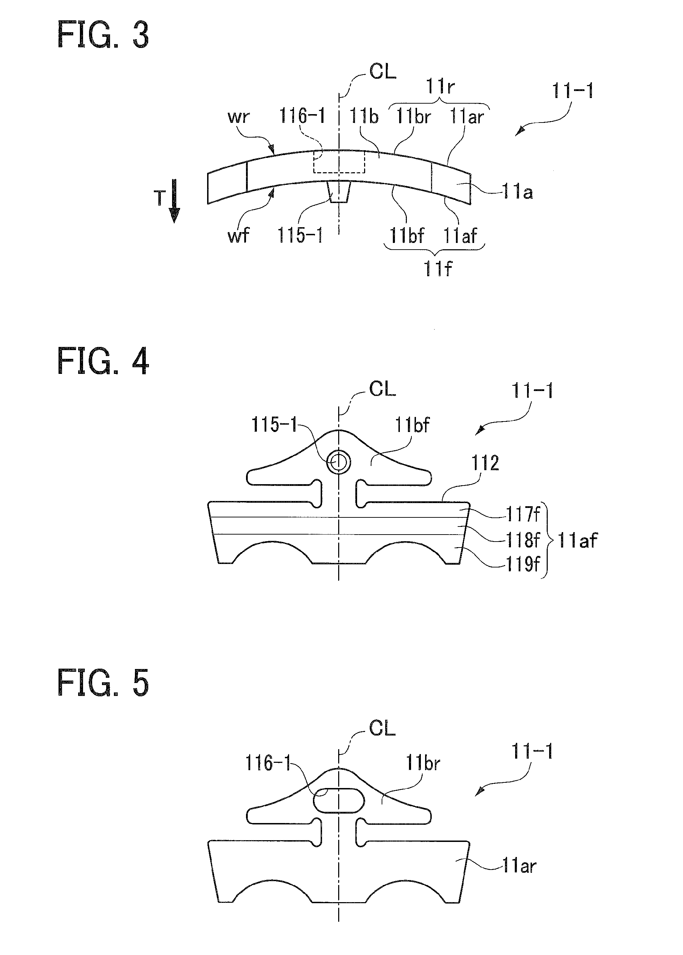

Next, a metal element of the CVT belt in a first example according to the present embodiment is explained. FIG. 3 is a top view of a metal element of the CVT belt in the first example according to the present embodiment. FIG. 4 is a front view of the metal element of the CVT belt in the first example according to the present embodiment. FIG. 5 is a rear view of the metal element of the CVT belt in the first example according to the present embodiment.

As shown in FIG. 3, a front end and a rear end of a metal element 11-1 in the first example are formed in a single curved shape smoothly protruding rearward in the traveling direction T. Specifically, the curved shape includes one upward projecting curve and this upward projecting curve is symmetrical in a left and right direction with respect to a belt center line CL. Since the curved shape of the front end and the curved shape of the rear end of the metal element 11-1 are identical, the metal elements 11-1 can be closely placed one behind another with this curved shape. The curved shape is configured to smoothly protrude, and therefore the metal elements 11-1 placed one behind another are allowed to smoothly slide along the curved shape. A protruding amount of the curved shape is preferably in a range of 0.5 times to twice a thickness of a thick portion of the metal element 11-1.

To be specific, a front end 11bf of the head part 11b and a front end 11af of the body part 11a, and a rear end 11br of the head part 11b and a rear end 11ar of the body part 11a are respectively formed to have a single curved shape smoothly protruding in a rearward direction. The curved shape is defined as a curved surface formed with one curved line such as a circular line or a parabolic line arranged symmetrical in the left and right direction with respect to the belt center line as a center axis and slid and duplicated in an upper and lower direction along the center line to form a curved surface. In a top view of the metal element 11-1, the front ends and the rear ends are respectively seen as one curved line wf and one curved line wr. The curved line wf on the front end and the curved line wr on the rear end are formed in an identical shape and both lines are in parallel to each other. Herein, a front end 11f of the metal element 11-1 means the front end 11bf of the head part 11b and the front end 11 of of the body part 11a, and a rear end 11r of the metal element 11-1 means the rear end 11br of the head part 11b and the rear end 11ar of the body part 11a.

As shown in FIG. 4, the front end 11af of the body part 11a is formed with: a thick-portion front end 117f; a tapered-portion front end 118f; and a thin-portion front end 119f, which are arranged in this order from an upper side to a lower side in the figure. The thick-portion front end 117f, the tapered-portion front end 118f, and the thin-portion front end 119f are the same curved surface formed by the above single curved line wf. Further, as shown in FIGs. 3 and 4, the head-part front end 11bf is integrally formed with an almost columnar-shaped protrusion 115-1 protruding forward on the belt center line CL. The protrusion 115-1 is configured such that a proximal end diameter is made slightly larger than a distal end diameter.

As shown in FIG. 5, the rear end 11at of the body part 11a is formed with the same curved surface formed by the above single curved line wr. While the metal elements 11 travel from the straight sections TD to the wound sections KD and JD between the drive sheave KS and the driven sheave JS, even if the metal elements 11 are inclined forward or rearward, at least the entire thick-portion front end 117f or the entire tapered-portion front end 118f of one metal element 11 is brought into a uniform contact with the rear end 11ar of the adjacent metal element 11 to form a mutual pressing surface of the adjacent metal elements 11. Further as shown in FIGs. 3 and 5, a recess 116-1 is formed on the belt center line CL as an oblong hole depressed forwardly from the head-part rear end 11br of the metal element 11-1. The long hole of the recess 116-1 is made large enough to create a space in the left and right direction when the protrusion 115-1 is engaged with the recess 116-1.

### (Metal element in Second example)

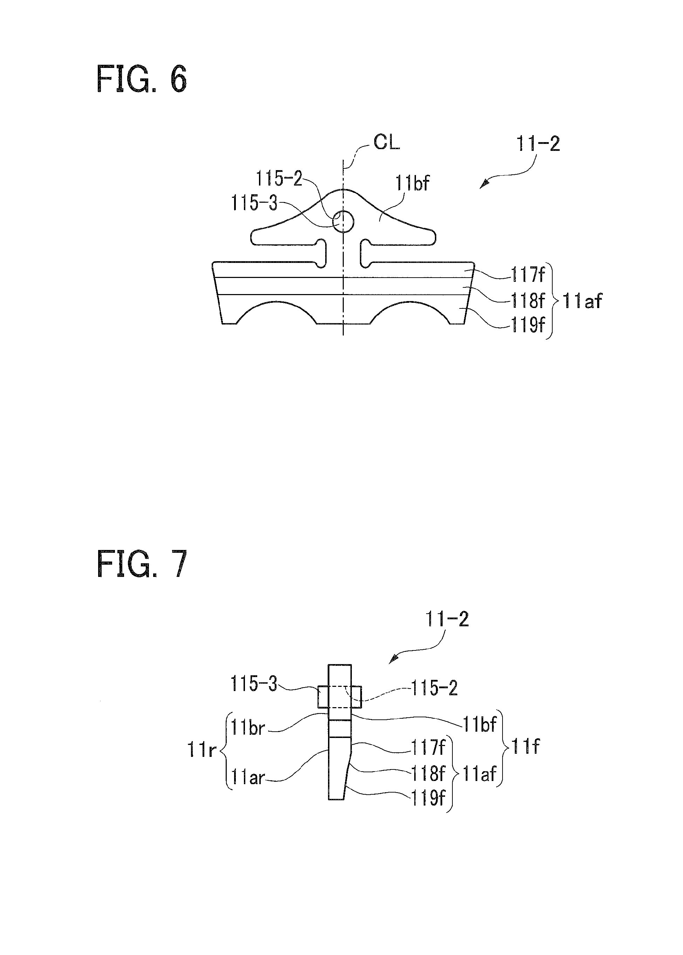

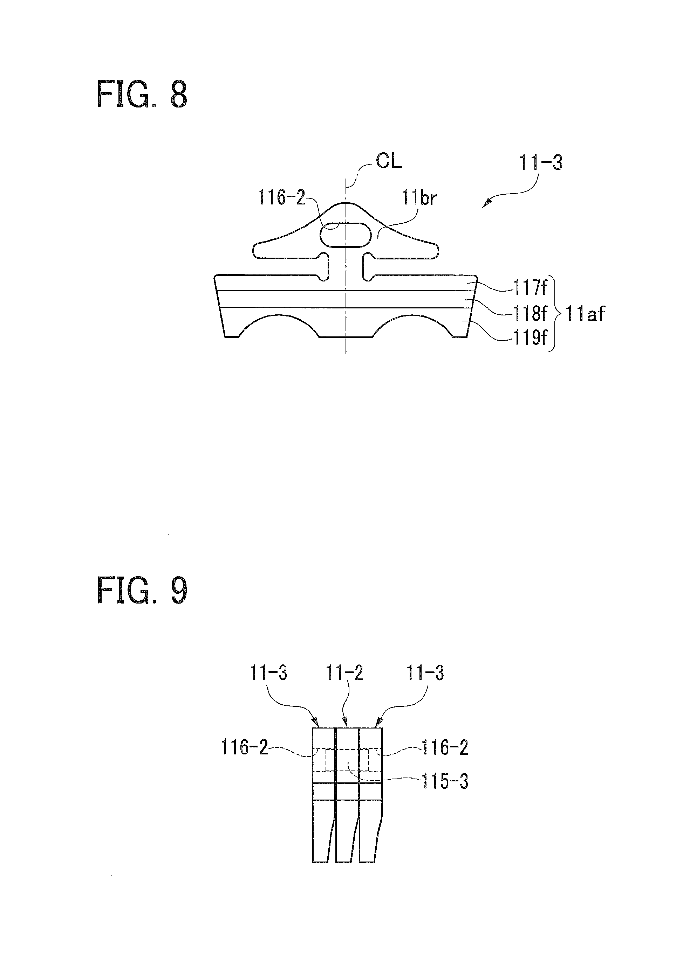

A metal element of the CVT belt in a second example according to the present embodiment is now explained. FIG. 6 is a front view of a first element of the CVT belt in the second example according to the present embodiment. FIG. 7 is a side view of the first element of the CVT belt in the second example according to the present embodiment. FIG. 8 is a front view of a second element of the CVT belt in the second example according to the present embodiment. FIG. 9 is a side view showing a state that the first element and the second element of the CVT belt are connected in the second example according to the present embodiment.

As shown in FIGs. 6 and 8, metal elements of the CVT belt in the second example according to the present embodiment includes a first element 11-2 and a second element 11-3. Front ends and rear ends of the first and second elements are formed in a single curved shape smoothly protruding rearward in the traveling direction, which is similar to the metal element 11-1 in the above first example. Herein, similar elements to those in the first example are given the same reference signs as in the first example and explanation thereof is basically omitted. The following explanation will be made with a focus on differences from the first example.

As shown in FIGs. 6 and 7, in the first element 11-2, the head part 11b is pierced with a first through hole 115-2 on the belt center line CL to extend in a direction perpendicular to the front end 11bf and the rear end 11br. Further, a columnar-shaped shaft 115-3 having an axial length longer than a plate thickness of the head part 11b is press-fitted in the first through hole 115-2. The shaft 115-3 protrudes forward and rearward equally in the traveling direction from the front end 11bf and the rear end 11br of the head part 11b. A protruding amount of the shaft 115-3 is preferably one third or more but less than a half of a plate thickness of a head part of the second element 11-3.

As shown in FIGs. 8 and 9, in the second element 11-3, the head part 11b is pierced with a second through hole 116-2 on the belt center line CL to extend in a direction perpendicular to the front end 11bf and the rear end 11br and to be engaged with the shaft 115-3. The second through hole 116-2 is an elongated through hole, having a long diameter extending in a left and right direction. A short diameter of the second through hole 116-2 is equal to an outer diameter of the shaft 115-3. Further, the first elements 11-2 and the second elements 11-3 are alternately arranged one behind another in the traveling direction.

### <Operation of Continuously variable transmission belt>

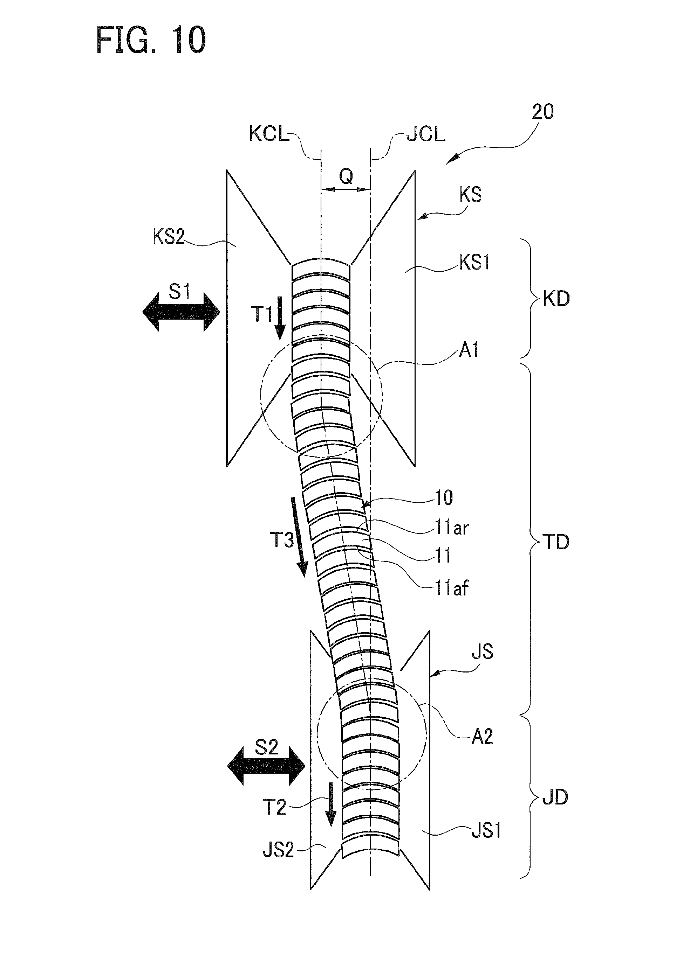

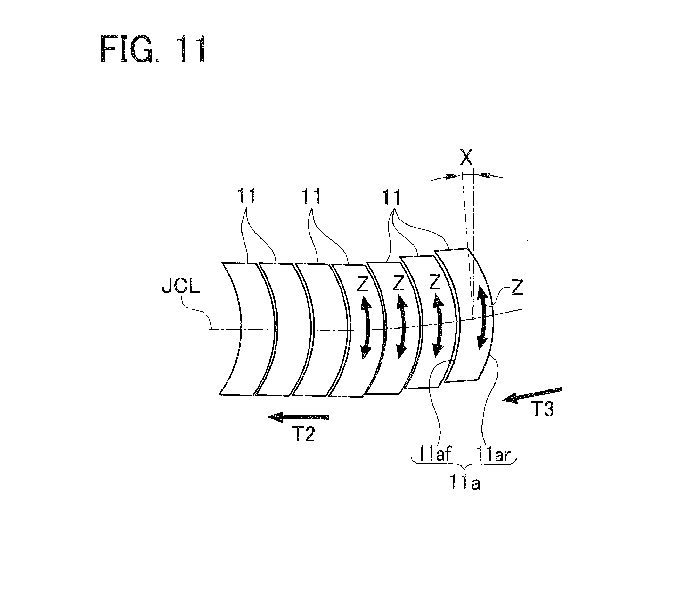

Next, an operation of the continuously variable transmission belt (CVT belt) according to the present embodiment is explained. FIG. 10 is a schematic top view of the CVT belt shown in FIG. 1 wound around a drive sheave and a driven sheave. FIG. 11 is a detailed view of a part A2 of the CVT belt shown in FIG. 10.

As shown in FIG. 10, a continuously variable transmission (CVT) 20 includes a drive sheave KS, a driven sheave JS, and a continuously variable transmission belt (CVT belt) 10. The drive sheave KS is provided with a fixed drive sheave KS1 fixed in an axial direction and a movable drive sheave KS2 configured to move in an axial direction as indicated with an arrow S1. The driven sheave JS is provided with a fixed driven sheave JS1 fixed in an axial direction and a movable driven sheave JS2 configured to move in an axial direction as indicated with an arrow S2. The CVT belt 10 is wound around the drive sheave KS and the driven sheave JS. The front end 11f and the rear end 11r of each metal element 11 in the CVT belt 10 are formed in a single curved shape smoothly protruding rearward (the opposite direction from arrows T1, T2, and T3) in a traveling direction. The front end 11f of the metal element 11 means the front end 11bf of the head part 11b and the front end 11 af of the body part 11a, and the rear end 11r of the metal element 11 means the rear end 11br of the head part 11b and the rear end 11ar of the body part 11a. However, in FIGs. 10 and 11, only the front end 11af of the body part 11a and the rear end 11ar of the body part 11a are illustrated for simplification.

The movable drive sheave KS2 is firstly moved in the direction indicated with the arrow S1 in order to adjust a radius of gyration of the wound section KD of the CVT belt 10 wound around the drive sheave KS. Further, the movable driven sheave JS2 is moved in the direction indicated with the arrow S2 to adjust the radius of gyration of the wound section JD of the CVT belt 10 wound around the driven sheave JS. Gear ratio of the CVT 20 is thus determined by the ratio of those radii of gyration. When the gear ratio is large, there is increased an amount of positional displacement Q between a belt center line KCL on the wound section KD wound around the drive sheave KS and a belt center line JCL on the wound section JD wound around the driven sheave JS.

The drive sheave KS is rotated by the driving force from a not-shown driving source, thereby moving the metal elements 11 of the CVT belt 10 in the traveling direction (the direction indicated with the arrows T1, T2, and T3). When the positional displacement Q is increased, it is increased an inclination angle of the traveling direction T3 of the metal elements 11 on the straight sections TD between the drive sheave KS and the driven sheave JS with respect to the traveling direction T1 of the metal elements 11 on the wound section KD wound around the drive sheave KS. Similarly, the increase in the positional displacement Q leads to increase in an inclination angle of the traveling direction T3 of the metal elements 11 on the straight sections TD between the drive sheave KS and the driven sheave JS with respect to the traveling direction T2 of the metal elements 11 on the wound section JD wound around the driven sheave JS.

As shown in FIGs. 10 and 11, the front end 11 af and the rear end 11ar of the body part 11 a of each metal element 11 are formed to have a single curved shape smoothly protruding rearward in the traveling direction, and thereby, the metal elements 11 gradually slide along the curved shape (to a direction indicated with arrows Z) and are successively inclined in sections where the metal elements 11 come in or out of contact with the drive sheave KS or the driven sheave JS (regions indicated with A1 and A2). Further, since the curved shape is symmetrical in the left and right direction with respect to the belt center line CL (KCL, JCL), the metal element 11 receives the pressing force equally symmetrical in the left and right direction with respect to the belt center line CL from the adjacent metal element 11. Accordingly, the metal elements 11 slide along the curved shape in the direction to which their belt center lines CL are aligned to each other. This enables the adjacent metal elements 11 to retain the state that the pressing force symmetrical in the left and right direction is applied by the entire curved shape serving as a contact surface. As a result, each inclination angle X can be largely reduced between the adjacent metal elements 11.

### <Manufacturing method for Continuously variable transmission belt>

A manufacturing method for a continuously variable transmission belt according to a second embodiment is now explained. The manufacturing method for the CVT belt in the second embodiment has a first manufacturing method and a second manufacturing method. The metal elements of the CVT belt are manufactured by a process including: a step of blanking plate-like material into a predetermined shape (fine blanking press); a first barrel step of removing burrs generated at the blanking step; a surface-shape forming step of forming a protrusion and others; a heat-processing step of hardening; a second barrel step of rounding corners; and others. Among these, featured steps of the manufacturing method for the CVT belt according to the invention are the surface-shape forming step and the heat-processing step. Herein, the following explanation is focused on the surface-shape forming step and the heat-processing step as the features of the invention.

### (First manufacturing method)

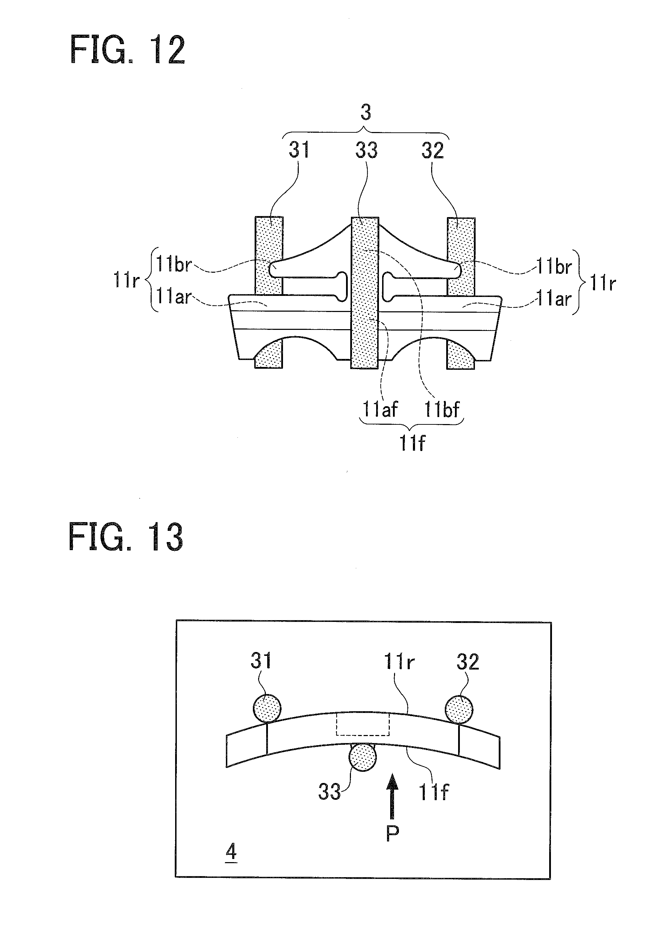

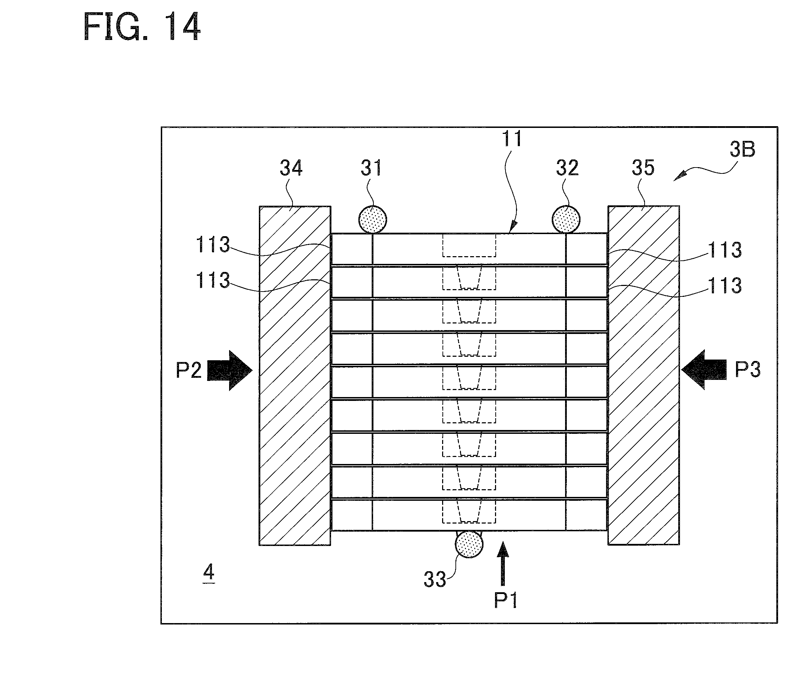

The first manufacturing method is now explained. FIG. 12 is a schematic view showing a method for correcting a metal element of a continuously variable transmission belt according to the second embodiment. FIG. 13 is a schematic view showing a process of correcting and heat-processing the metal element of the CVT belt according to the second embodiment. FIG. 14 is a view showing a method for heat-processing the metal elements while the metal element of the CVT belt is stacked and corrected according to the second embodiment.

As shown in FIG. 12, the first manufacturing method is provided with a correction tool 3 including: a pair of receiving portions 31 and 32 configured to support the rear end 11r, among the front end 11f and the rear end 11r of the metal element 11, in positions separated from each other by a predetermined distance in a left and right direction with respect to the belt center line; and a pressing portion 33 configured to press the front end 11f on the belt center line. Each of the receiving portions 31 and 32 and the pressing portion 33 has a columnar-shaped outer circumferential surface. The outer circumferential surfaces of the receiving portions 31 and 32 symmetrically and uniformly contact in the left and right direction with the head-part rear end 11br and the body-part rear end 11ar of the metal element 11. The outer circumferential surface of the pressing portion 33 equally contact with the head-part front end 11bf and the body-part front end 11af of the metal element 11 on the belt center line. The outer circumferential surface of the pressing portion 33 is formed along the thick-portion front end 117f, the tapered-portion front end 118f, and the thin-portion front end 119f of the body-part front end 11af.

As shown in FIG. 13, the metal element 11 is clamped in a direction perpendicular to the plane (a direction indicated with an arrow P) by the correction tool 3 and retained in a heat-processing furnace 4 for a predetermined period. The metal element 11 is softened by the heat at the heat processing to form a curved surface in a predetermined direction. By utilizing thermal energy of the heat-processing furnace 4, a correction load of the correction tool 3 can be lowered than in a method for correcting at a room temperature, achieving simplification of the correction tool 3. Correction by heating leads to less spring back after formation of the curved shape. Accordingly, the metal element 11 can be formed in the curved shape with high precision. Further, since heat-processing and formation of the curved shape are concurrently performed, productivity of the metal element can be improved.

As shown in FIG. 14, a plurality of the metal elements 11 may be subjected to heat-processing (heat treatment) as being clamped by a second correction tool 3B. The second correction tool 3B is similar to the above correction tool 3 in that the tool includes: the pair of receiving portions 31 and 32 configured to support the rear end 11r, among the front end 11f and the rear end 11r of the metal element 11, in positions separated from each other by a predetermined distance in the left and right direction with respect to the belt center line; and the pressing portion 33 configured to press the front end 11f on the belt center line. The second correction tool 3B further includes compression parts 34 and 35 configured to apply compression loads P2 and P3 to the stacked metal elements 11 from left and right sides, which is a different feature from that of the correction tool 3. The compression loads P2 and P3 are applied from the compression parts 34 and 35, so that the curved shape of the metal elements 11 can be further effectively formed. Further, by applying the compression loads P2 and P3 to the drive transmission parts 113 of the metal elements 11 from perpendicular directions, the drive transmission parts 113 of the metal elements 11 are arranged in parallel with the traveling direction, enhancing the efficiency in transmitting the driving force in the CVT 20.

### (Second manufacturing method)

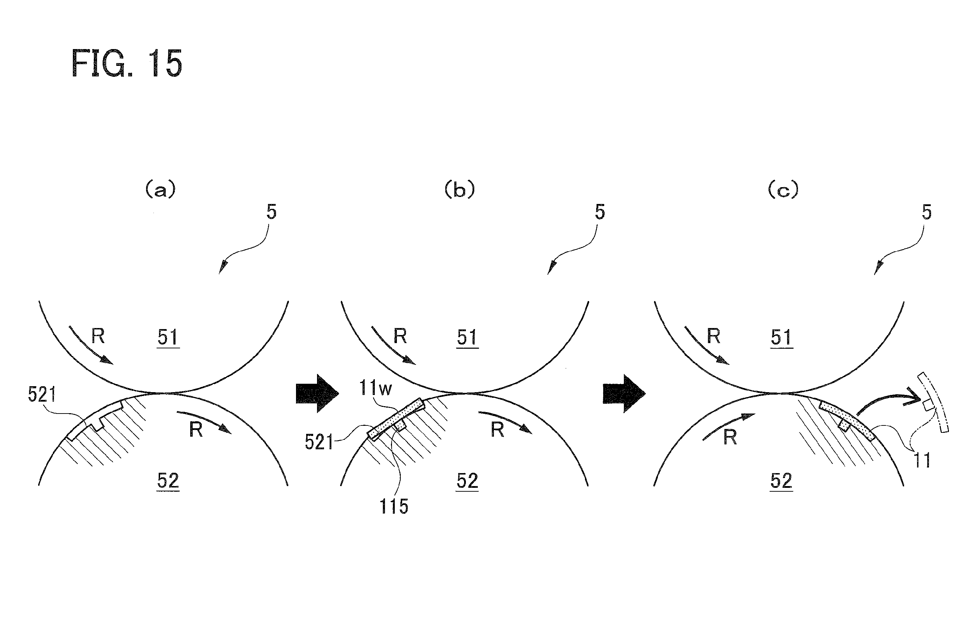

The second manufacturing method is now explained. FIG. 15 is a schematic view showing a method of forming a curved shape by roll-pressing a metal element for a continuously variable transmission belt according to the second embodiment. FIG. 15(a) is a sectional view of a roll forming die before the metal element is inserted, FIG. 15(b) is a sectional view of the roll forming die when the metal element is inserted, and FIG. 15(c) is a sectional view of the roll forming die after the metal element is formed.

As shown in FIG. 15(a), the second manufacturing method is provided with a roll forming die 5 configured to form a curved shape of the metal element 11 by roll press, the roll forming die 5 including an upper roll 51 having a columnar outer circumferential surface and a lower roll 52 having a columnar outer circumferential surface formed with a recessed groove 521 to form the curved shape of the metal element. The upper roll 51 and the lower roll 52 are placed one on the other in contact with each other and rotated respectively in directions indicated with arrows R. Rotary shafts of the upper roll 51 and the lower roll 52 are subjected to predetermined formation load in upper and lower directions.

As shown in FIG. 15(b), an intermediate product 11w of the metal element is inserted in the recessed groove 521 of the lower roll 52. This intermediate product 11w is produced in advance by punching along an outline of an outer shape and extruding the protrusion 115 and the not-shown recess 116 of the head part 11b. The intermediate product 11w of the metal element is placed in position in the recessed groove 521 in a manner that the protrusion 115 of the head part 11b is fitted in the recessed groove 521.

As shown in FIG. 15(c), the intermediate product 11w of the metal element positioned in the recessed groove 521 of the lower roll 52 is clamped and pressed to form the predetermined curved shape by the upper roll 51 and the lower roll 52 rotating respectively in the directions indicated with the arrows R. According to the above mentioned roll forming die 5 provided with the upper roll 51 having the columnar outer circumferential surface and the lower roll 52 having the columnar outer circumferential surface formed with the recessed groove 521 to form the curved shape, the intermediate product 11w of the metal element 11 can be easily inserted in the recessed groove 521 of the lower roll 52, so that the curved shape of the metal element 11 can be formed in short time. Further, the curved shape is formed by rolling process in which the intermediate product 11w is clamped under pressure by the upper roll 51 and the lower roll 52. Thus, the curved shape can be processed with less formation load compared to that in stamping (pressing). Moreover, the formation load is stable and the curved shape of the metal element 11 can be thereby formed with high precision.

The present and the second embodiments of the invention can thus provide the CVT belt 10 and the manufacturing method therefor which are capable of, as well as enhancing efficiency in transmitting the driving force and torque capacity in the CVT 20, improving durability of the metal element 11 without applying excessive load to the metal element 11 against high-load torque.

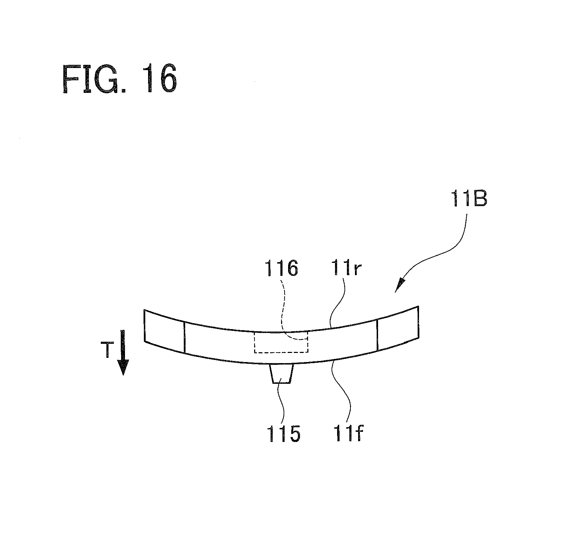

The above mentioned present and the second embodiments may be applied with changes without departing from scope of the invention. For example, in the present embodiment, the metal element 11-1 in the first example and the first element 11-2 and the second element 11-3 in the second example are respectively configured to have the front and rear ends each formed to be of single curved shape smoothly protruding rearward in the traveling direction. The direction in which the curved shape protrudes is not limited to this and for example, as shown in FIG. 16, a metal element 11B may be in a single curved shape smoothly protruding forward (a direction indicated with an arrow T) in the traveling direction. Even if the direction in which the curved shape protrudes is reversed, it is almost similar to the present embodiment in a manner that the metal element 11B gradually slides and is successively slanted along the curved shape in sections where the metal element 11B comes to contact with the drive sheave KS and the driven sheave JS. Accordingly, the adjacent metal elements 11B are capable of retaining the state that the pressing force is applied by the entire curved shape as a contact surface, thus largely reducing each inclination angle X among the adjacent metal elements 11B.

### INDUSTRIAL APPLICABILITY

The present invention is utilizable to a continuously variable transmission belt and a manufacturing method therefor in which a plurality of metal elements arranged one behind another are supported annularly by a stacked ring body and wound around a drive sheave and a driven sheave to transmit driving force between the both sheaves.

### REFERENCE SIGNS LIST

- 3:: Correction tool
- 4:: Heat-processing furnace
- 5:: Roll formation die
- 10:: Continuously variable transmission belt
- 11, 11B:: Metal element
- 12:: Endless metal ring
- 13:: Stacked ring body
- 11-1:: Metal element
- 11-2:: First element
- 11-3:: Second element
- 11a:: Body part
- 11b:: Head part
- 11c:: Neck part
- 11f:: Front end of the metal element
- 11r:: Rear end of the metal element
- 11bf:: Front end of the head part
- 11br:: Rear end of the head part
- 31, 32:: Receiving portion
- 33:: Pressing portion
- 51:: Upper roll
- 52:: Lower roll
- 115:: Protrusion
- 116:: Recess
- 115-2:: First through hole
- 115-3:: Shaft
- 116-2:: Second through hole
- 521:: Recessed groove

## Claims

1. A continuously variable transmission belt including: a plurality of metal elements arranged one behind another; and a stacked ring body annularly supporting the metal elements, the continuously variable transmission belt being wound around a drive sheave and a driven sheave to transmit a driving force between the drive sheave and the driven sheave,
wherein a front end and a rear end of each of the metal elements are formed in a single curved shape smoothly protruding forward or rearward in a traveling direction.

2. The continuously variable transmission belt according to claim 1, wherein the curved shape is symmetrical in a left and right direction with respect to a belt center line.

3. The continuously variable transmission belt according to claim 1 or 2, wherein either one of front and rear ends of a head part of each of the metal elements is formed with a protrusion and the other end is formed with a recess, the recess being a long slot extending in a left and right direction.

4. The continuously variable transmission belt according to claim 1 or 2, including: first elements each of which is formed with a first through hole penetrating through front and rear ends of a head part of the first element and a shaft press-fitted in the first through hole to protrude by a predetermined length from the front end and the rear end of the head part; and second elements each of which is formed with a second through hole penetrating through front and rear ends of a head part of the second element, the second through hole being engaged with the shaft and being an elongated hole extending in a left and right direction,
wherein the first elements and the second elements are alternately arranged.

5. The continuously variable transmission belt according to any one of claims 1 to 4, wherein the curved shape is a single arcuate shape.

6. A method for manufacturing the continuously variable transmission belt according to any one of claims 1 to 5,
wherein the method includes a heat processing step of:
providing a correction tool including: a pair of receiving portions configured to support either one of the front end and the rear end of the metal element in positions separated from each other by a predetermined distance in a left and right direction with respect to a belt center line; and a pressing portion configured to press the other end on the belt center line, and
heat-processing each of the metal elements while the metal element is clamped and pressed by the correction tool.

7. A method for manufacturing the continuously variable transmission belt according to any one of claims 1 to 5,
wherein the method includes a curve processing step of:
providing an upper roll having a columnar outer circumferential surface and a lower roll having a columnar outer circumferential surface formed with a recessed groove configured to form the curved shape; and
inserting each of the metal elements into the recessed groove and pressing the metal element by the upper and lower rolls to form the curved shape.
